# EUROPEAN PATENT SPECIFICATION

(11) **EP 1 645 936 B1**
(45) Date of publication and mention of the grant of the patent: **23.04.2008**
(21) Application number: 04023755.4
(22) Date of filing: 06.10.2004
(51) Int. Cl.: G06F 1/16

(54) **Data terminal access control**
Zugriffssteuerung für Kommunikationsendgerät
Contrôle d'accès pour appareil terminal de communication

(43) Date of publication of application: 12.04.2006
(73) Proprietor: Nokia Corporation, 02150 Espoo (FI)
(72) Inventor: Chipchase, Jan, Meguro Honcho Meguro Ku Tokyo 157-0002 (JP); Grignani, Raphael, 00130 Helsinki (FI); Hashizume, Kenichi, Kitagunma-gun Gunma (JP)
(74) Representative: van Walstijn, Bartholomeus G. G.

(56) References cited:
- EP-A- 0 840 197
- EP-A- 1 132 803
- EP-A- 1 156 640
- US-A- 5 235 532

## Description

The present invention relates to controlling access to terminals, in particular to terminals that contain private and/or confidential information and are used to share non-private or non-confidential information information, e.g. information suitable for sharing.

### BACKGROUND ART

Terminals, such as PCs, Notebooks, Tablet PCs, and increasingly Personal digital assistants (PDA), and mobile phones are used to share information, e.g. showing photos, videos, messages, playing video games, etc. Some of the data on the terminals is suitable for sharing, whilst other information such as bank statements, credit card information, certain messages, etc., are private and/or confidential.

Image and video capture can be highly social - involving others in the image/video capture, and browsing the content together. The terminals are carried in a wide range of social situations, and consequently there are many planned and unplanned opportunities to share with peer group and non-peer group. Browsing of content may involve everyone clustered around the capturing device, or handing the terminal around in a group. Once the user (owner) of the terminal has handed the terminal out he/she is reliant on the social rules of the group, but essentially he/she has little control over the data that is accessed by the other users while browsing. Persons in the group could deliberately or accidentally access information that was not intended for them. The risk may lead owners of terminals to refrain from passing their terminal on, thus not exploiting all the possible uses of the device. The consequence is that there is a risk of revealing private information and of deleting or recording information, especially dynamic lists.

US-A-4 845 772 discloses a radiotelephone with a control switch disabling is disclosed. A flip element which contains a microphone and covers a keypad and other control buttons when in a closed position also activates a hookswitch. When the hookswitch and microprocessor indicate that the flip element is in a closed position, the on/off switch cannot be activated to turn the radiotelephone on or off and switches which control volume level are deactivated. Thus, US-A-4 845 772 shows a radiotelephone having a flip element that can assume two positions, one closed and one open, and thereby functions as a deactivation switch for the radiotelephone. If the radiotelephone is passed to a second user the second user will have full access to the data stored on the radiotelephone when the flip element is in the open position.

There is therefore a need for a method and terminal that prevents unauthorized access to private and/or confidential information when a terminal has handed over for sharing information that is suitable for sharing.

### DISCLOSURE OF THE INVENTION

The present invention provides a terminal comprising a processor, a memory associated with said processor, a user interface through which the user operates the terminal, a housing comprising a first housing part that can be moved relative to a second housing part between a closed position and a first opened position, and sensor means associated with said processor for detecting the position of said first housing part relative to second housing part, said processor being configured to control access to the terminal in dependence of the position of said first housing part, providing at the first position a first mode allowing full access, characterised in that said first housing part can be moved to at least a further second opened position at which said processor is configured to provide a second mode allowing restricted access.

The present invention also provides a method for controlling access to a terminal provided with a processor, a user interface through which the user operates the terminal, and a housing comprising a first housing part that can be moved relative to a second housing part, between a closed and further at least first and second opened positions, said method comprising the steps of: giving a first, full level of access to data and/or applications in the terminal in the first position of said first housing part, characterised by giving a second, restricted level of access to data and/or applications in the terminal in the second position of the first housing part.

### BRIEF DESCRIPTION OF THE DRAWINGS

In the following detailed portion of the present description, the invention will be explained in more detail with reference to the exemplary embodiments shown in the drawings, in which
Fig. 1 is a perspective view of a terminal in accordance with the present invention in a closed position;
Fig. 2 is a perspective view of the terminal of Fig. 1 in a working position;
Fig. 3 is a perspective view of the terminal of Fig. 1 in a sharing position;
Fig. 4 is a perspective view of the terminal of Fig. 1 in a camera position;
Fig. 5a is a block diagram illustrating the general architecture of the terminal of Fig. 1,
Fig. 5b and 5c are perspective cut-out views of a position sensor in the terminal of Fig. 1, and
Fig. 6 is a flow chart illustrating an embodiment of access control procedure in accordance with the present invention.

### DETAILED DESCRIPTION

In the following detailed description, a terminal according to the invention in the form of a hand portable phone, preferably a cellular/mobile phone, will be described by the preferred embodiments. The term terminal as used here includes all portable/mobile terminals provided with a processor and user interface. Examples of other terminals falling under the term terminal as used here are communicators, PDAs, notebook PCs and tablet PCs.

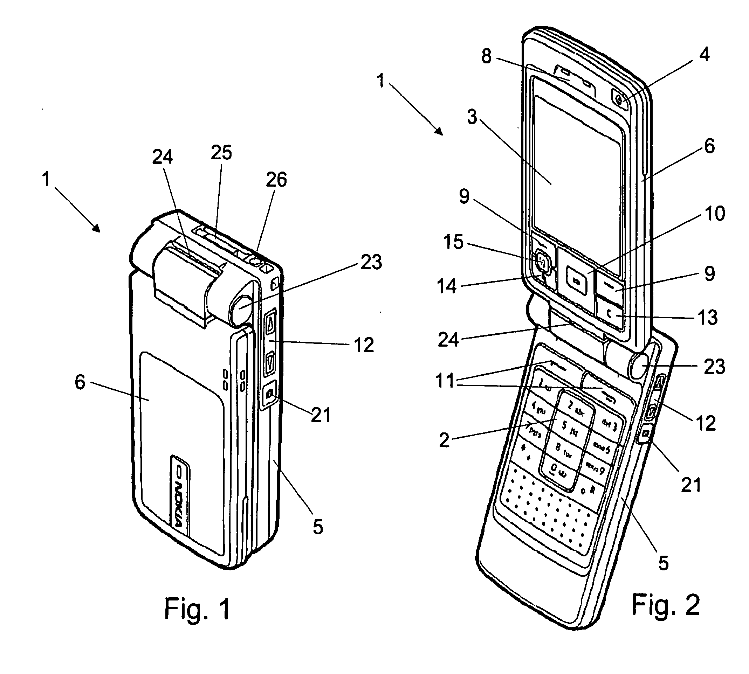

Referring now to Fig. 1 a mobile phone 1 according to a preferred embodiment of the invention is disclosed.

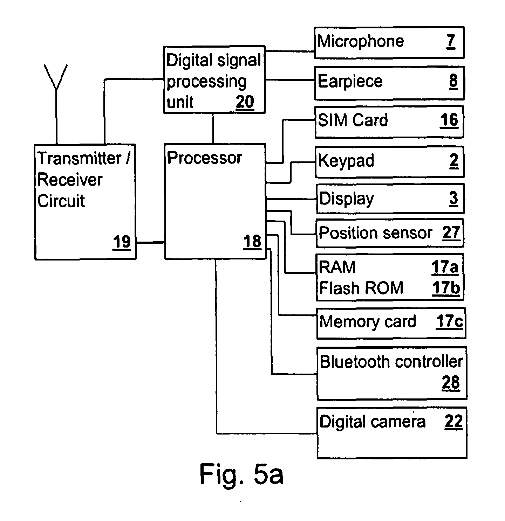

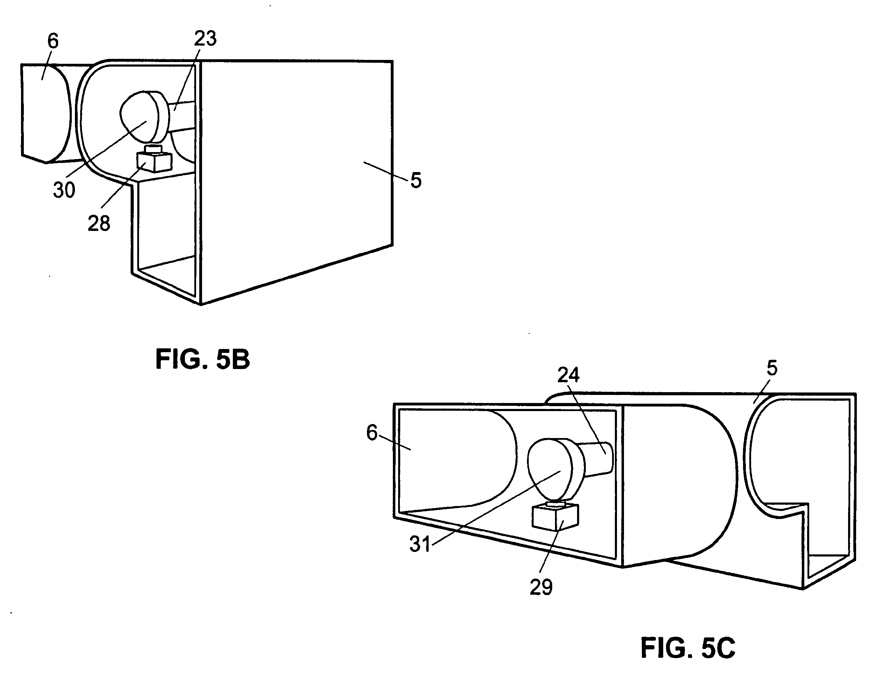

The mobile phone 1 is of the so called swivel type, with two housing parts that can fold about hinge 23 and swivel about a swivel 24. A first housing part 5 contains the battery (not shown), is provided with a 3 by 4 (ITU-T) alphanumerical keypad 2 and with call handling keys 11 (on-hook and off-hook). A camera switch 21 and a loudness toggle switch 12 are disposed on the right hand side of the first housing part 5. The first housing part also includes the microphone 7 (shown in Fig. 5 only, a charger connector 26 and a Pop-Port^{™} 25.

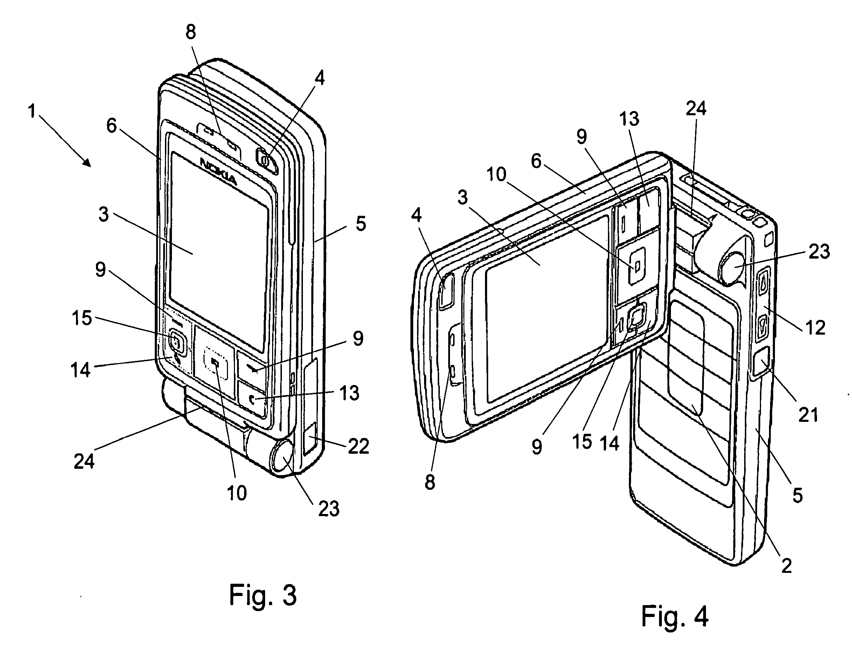

The second housing part 6 includes the display 3, an on/off button 4, an earpiece 8 (only the openings are shown), two multifunctional softkeys 9 directly under the display 3, a four-way plus select key 10 placed centrally under the display 3, a clear key 13, a marking key 14 (for text editing and marking), and a menu key 15 and a digital camera 22 (only the camera lens is shown in Fig. 3). The phone is operated with a hierarchical menu that is accessed via the softkeys 9 in a well known manner.

The mobile phone 1 according to the preferred embodiment is adapted for communication via a cellular network, such as the GSM 900/1800 MHz network, but could just as well be adapted for use with a Code Division Multiple Access (CDMA) network, a 3G network, or a TCP/IP-based network (e.g. via WLAN, WIMAX or similar).

The display 3 is typically made of an LCD with optional back lighting, such as a TFT matrix capable of displaying color images.

A releasable rear cover (not shown) in the first housing part 5 gives access to a SIM card slot, a memory card slot and a slot for a rechargeable battery pack (not shown) in the back of the first housing part that supplies electrical power for the electronic components of the mobile phone.

The upper housing part 6 can be folded from the closed position shown in Fig. 1 to the working position shown in Fig. 2 by pivoting about hinge 23. The mobile phone is placed in the sharing position shown in Fig. 3 by swiveling the second housing part 6 over 180° and folding the second housing part back. In the sharing position the keypad 2 and the call handling keys 11 cannot be accessed.

Fig 4 illustrates the swiveling principle with the mobile phone 1 in a camera position.

Fig. 5a illustrates, in block diagram form, the hardware architecture of a mobile phone 1 constructed in accordance with the present invention. A processor 18 controls the communication with the cellular network via the transmitter/receiver circuit 19 and an internal antenna. A microphone 7 transforms the user's speech into analogue signals, the analogue signals formed thereby are A/D converted in an A/D converter (not shown) before the speech is encoded in a digital signal processing unit 20 (DSP). The encoded speech signal is transferred to the processor 18, which e.g. supports the GSM terminal software. The processor 18 also forms the interface to the peripheral units of the apparatus, including a RAM memory 17a, a

Flash ROM memory 17b, a memory card 17c, a SIM card 16, the display 3, the Pop-Port^{™}, a position sensor 27, a short range (Bluetooth^{®}) transmitter/receiver 28, the digital camera 22, the keypad 2, and keys 4, 9-15, 21 (as well as data, power supply, etc.). The digital signalprocessing unit 20 speech-decodes the signal, which is transferred from the processor 18 to the earpiece 8 via a D/A converter (not shown).

With reference to Figs. 5b and 5c, the position sensor 27 includes a micro-switch 28 for detecting movement about hinge 23 and another micro-switch 29 for detecting movement about swivel 24. The micro-switches 28,29 are activated by means of cams 30,31 mounted on the hinge and swivel axes, respectively. The micro-switches 28,29 are mounted to the housing parts 5,6 of the mobile phone. Each cam 30,31 can be profiled to activate the respective micro-switch 28,29 for any part of the available rotation angle, or to activate it in more than one discrete position. In Fig. 5b micro-switch 28 is not activated, whilst micro-switch 29 is activated in Fig. 5c. The processor 18 determines the relative position of the housing parts 5,6 by using the information of the two switch-states simultaneously.

According to another embodiment (not shown) the sensors may not only detect end positions but also intermediate positions and include rotary sensors such as potentiometers.

The processor 18 monitors the signal from the position sensor 27 and changes the access level to applications, data and functionality in the mobile phone accordingly. In a default configuration, the user has full access to applications, data and functions in the working position, whilst assess is restricted in the sharing position.

Restricted access, is not necessarily a lesser selection of features and locations, i.e. in the restricted access mode another version of a given application, more suited for sharing whilst maintaining privacy and or confidentiality, could be available. This other version of the application will e.g. not have functions for deleting files, but could e.g. include a slide show function that is not necessarily available in the working position version of the application.

The re-orientation of the display 3 from the sharing position to the working position is easily noticed by the owner (and by bystanders - social control) of the mobile phone 1, should he/she have borrowed the mobile phone 1 to someone for sharing information.

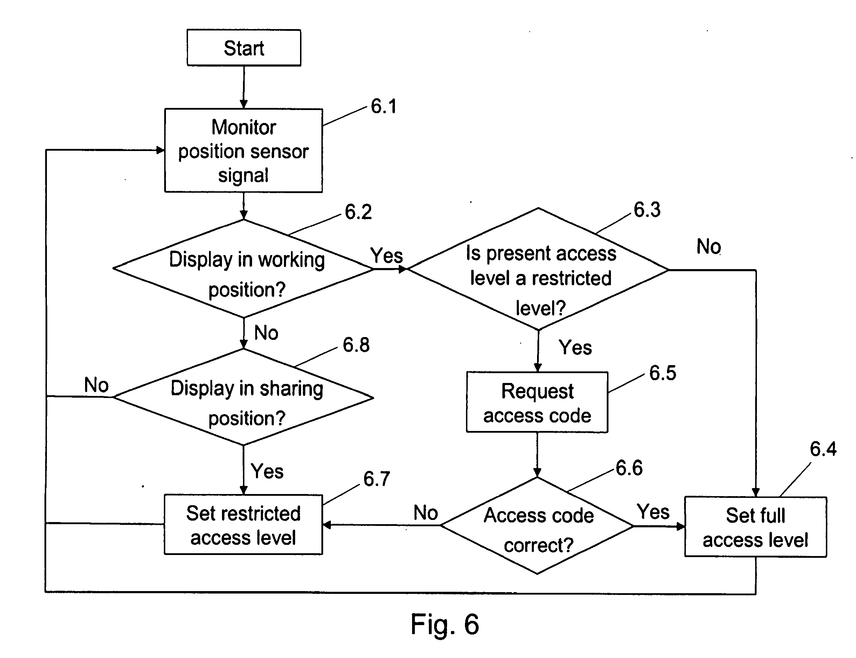

Referring now to Fig. 6 the process of changing access levels is illustrated in the form of a flowchart. At step 6.1 the signal from position sensor 27 is monitored. At step 6.2 it is determined if the display 3 is in the working position. If the display 3 is in the working position it is determined at step 6.3 if the present access level is a restricted access level. If the present access level is not a restricted access level, then the full access level is activated at step 6.4.

If at step 6.3 the present access level is a restricted access level, then an access code is requested at step 6.5. At step 6.6 it is determined if the access code has been entered correctly. If it has determined at step 6.6 that the access code has been entered correctly, then the full access level is activated at step 6.4. If it has determined at step 6.6 that the access code has been entered incorrectly, then a restricted access level is set at step 6.7. The access code steps 6.5 and 6.6 can be omitted (e.g. this can be a feature that the user can activate and deactivate via the menu) or can be replaced with another form of verification. The verification can include biometric reading such as fingerprint check (the phone will in this case be provided with a finger print sensor, not shown), proximity to another device, e.g. a RFID (Radio Frequency Identification) object, etc.

If it has been determined at step 6.2 that the display 3 is not in the working position, then it is determined at step 6.8 if the display 3 is in the sharing position. If it is determined at step 6.8 that the display 3 is in the sharing position, then a restricted access level is set in step 6.7. If it is determined at step 6.8 that the display is not in the sharing position, then it is assumed that the display is in the closed or any intermediate position (such as the camera position) and no change to the access level is performed.

After steps 6.4, 6.7 and 6.8 the process returns at step 6.1 to monitor the signal from the position sensor 27.

The restricted access level or levels in the phone need not be fixed, and may be user set and/or depend on the type of application that is active on the mobile phone at the time that the display 3 is moved to the sharing position. When e.g. a photo displaying application is active when the sharing position is assumed, the only functionality available can be set to browse, zoom and view images in the present folder. When the proprietor of the mobile phone then passes the mobile phone over to someone else, the other person could not, deliberately or accidentally, delete files or access files that were not intended for sharing, unless the display is returned to the working position. Even if the access code request of step 6.5 is not active the proprietor of the mobile phone 1 can easily observe a change of the display 3 from the sharing to the working position and thus timely detect a potential risk of access abuse.

When the mobile phone 1 is linked via e.g. a wireless connection such as Bluetooth to other terminals for sharing content on the mobile phone 1 with other terminals, access to the mobile phone 1 from the other terminals can be controlled in the same was as described above for access via the user interface. Thus, the proprietor of the mobile phone 1 can in the sharing position safely share a particular application or particular files online with other terminals.

The user can via the menu control the restricted access levels, e.g. in an option under "Menu" > "Settings" > "Display Settings". Examples of these settings are:
specified applications;
content in a specific location, e.g. a particular folder, drive or memory card;
only in a particular viewing mode, e.g. only full screen when viewing images;
only a specific file, with or without functionality restrictions; e.g. only a particular SMS is viewable, without any editing or reply,
functionality, etc.;

The default content and applications available in the sharing position include:
video, still image and audio content that can be browsed;
camera application can take photos, shoot video;
calls can be receive, e.g. not placed.

An additional security measure for re-assuming the normal mode could be a requirement to unlock the sharing mode with an RFID key (identification based on a code stored in RF tag). Suitable RFID keys and methods for this purpose are known from WO 2004/003829, hereby incorporated by reference.

According to another embodiment (not shown) the terminal is a laptop or tablet PC with a swivel display. The sharing mode is activated by placing the display face up on the keypad, whilst the working position is any other position in which the display is not placed face down on the keyboard (closed position).

The terminal element that can be moved relative to another terminal element to assume the sharing and working positions does not need to be as described above a display and a main housing part. A movable keypad, keypad cover, or any other terminal element that can be used to provide at least two visibly easily distinguishable positions of the terminal could be used.

According to another embodiment (not shown) the mobile phone could be a multi hinged device, e.g. a device in which the display, keypad, keypad cover, etc. are connected to a main body via a multi-hinged construction. Other embodiments could use any desirable type of connection between two (or more) parts that are movable relative to one another, and wherein a reorientation to change mode is noticeable by people in the immediate vicinity.

According to a further aspect of the invention, there may be provided means other than the at least one terminal element by which the user can place the terminal into a restricted access mode. In one embodiment, the processor may be responsive to a PIN code entered by the owner to enter and possibly exit the restricted access mode. In another embodiment, the terminal may include an RFID reader, and the processor may be responsive to a particular RFID tag to enter and possibly exit the restricted access mode. When the owner of the terminal shares the terminal with another person, he maintains possession of the RFID tag. Preferably, the terminal includes means by which the owner can remotely verify that the terminal remains in restricted access mode. Examples include lighting up the phone cover, or modulating the normal display backlighting of the phone in a distinctive way. In this further aspect of the invention, said at least one terminal element need not form part of the terminal.

Although the present invention has been described in detail for purpose of illustration, it is understood that such detail is solely for that purpose, and variations can be made therein by those skilled in the art without departing from the scope of the invention.

## Claims

1. A terminal comprising:
a processor,
a memory associated with said processor,
a user interface through which the user operates the terminal,
a housing comprising a first housing part that can be moved relative to a second housing part between a closed position and a first opened position,
and sensor means associated with said processor for detecting the position of said first housing part relative to second housing part,
said processor being configured to control access to the terminal in dependence of the position of said first housing part, providing at the first position a first mode allowing full access,
**characterised in that**
said first housing part can be moved to at least a further second opened position at which said processor is configured to provide a second mode allowing restricted access.

2. A terminal according to claim 1, wherein the first housing part and the second housing part are housing parts of the terminal that are movably connected to one another.

3. A terminal according to claim 1 or 2, wherein said second housing part comprises a display.

4. A terminal according to any of claims 1 to 3, wherein said first housing part comprises a keypad or a keypad cover.

5. A terminal according to any of claims 1 to 4, wherein the processor is configured to give full access to data and/or applications and/or functionality in the terminal when said first housing part is in the first position relative to the second housing part.

6. A terminal according to claim 5, wherein the processor is configured to restrict access to data and/or applications and/or functionality in the terminal when said first housing part is in the second position relative to said second housing part.

7. A terminal according to claim 6, wherein said processor is configured to request a verification before granting full access to data and/or applications and/or functionality in the terminal when said first housing part is moved from said second position to said first position.

8. A terminal according to any of claims 1 to 7, wherein said processor is configured to limit access in said second position to one or more predetermined applications.

9. A terminal according to any of claims 1 to 8, wherein said processor is configured to limit access in said second position to files in one or more predetermined memories or data storage media associated with the terminal, to files in one or more predetermined folders in memories associated with the terminal on storage media associated with said terminal or to one or more predetermined files in memories associated with the terminal.

10. A terminal according to any of claims 1 to 9, wherein said processor is configured to limit the access in said second position to one or more predetermined functionalities.

11. A terminal according to any of claims 1 to 10, wherein the terminal is provided with a connection to one or more other terminals or to a network, and said processor being configured to restrict use of said connection in dependence of the position of said first housing part relative to said second housing part.

12. A terminal according to any of claims 1 to 11, wherein the terminal is a notebook or tablet PC, and said second housing part includes the display.

13. A terminal according to any of claims 1 to 11, wherein said terminal is a personal digital assistant.

14. A terminal according to any of claims 1 to 11, wherein said terminal is a mobile phone.

15. A method for controlling access to a terminal provided with a processor, a user interface through which the user operates the terminal, and a housing comprising a first housing part that can be moved relative to a second housing part, between a closed and further at least first and second opened positions, said method comprising the steps of:
giving a first, full level of access to data and/or applications in the terminal in the first position of said first housing part,
**characterised by**
giving a second, restricted level of access to data and/or applications in the terminal in the second position of the first housing part.

16. A method according to claim 15, wherein said first and second position of said first housing part relative to the second housing part are easily recognizable by observers, also observers other than the person using the terminal.

17. A method according to claim 15 or 16, comprising the step giving full access to data and/or applications and/or functionality in the terminal in the first access level.

18. A method according to any of claims 15 to 17, comprising the step of giving restricted access to data and/or applications and/or functionality in the terminal in the second access level.

19. A method according to any of claims 15 to 18, comprising the step of requesting a verification before granting full access to data and/or applications and/or functionality in the terminal when first housing part is moved relative to the second housing part from said second position to said first position.

20. A method according to any of claims 15 to 19, wherein said processor is configured to limit the access in said second position to one or more predetermined applications.

## Patentansprüche

1. Endgerät, umfassend:
einen Prozessor,
einen Speicher, der mit dem Prozessor verbunden ist,
eine Benutzerschnittstelle, durch welche der Benutzer das Endgerät bedient,
ein Gehäuse, umfassend einen ersten Gehäuseteil, welcher relativ zu einem zweiten Gehäuseteil zwischen einer geschlossenen und einer ersten geöffneten Position bewegt werden kann,
und Sensormittel, welche mit dem Prozessor zum Erfassen der Position des ersten Gehäuseteils relativ zum zweiten Gehäuseteil verbunden sind,
wobei der Prozessor konfiguriert ist, um den Zugang zu dem Endgerät in Abhängigkeit der Position des ersten Gehäuseteils zu steuern, und an der ersten Position einen ersten Modus, der vollen Zugang erlaubt, zur Verfügung stellt,
**dadurch gekennzeichnet, dass**
der erste Gehäuseteil an zumindest eine weitere zweite geöffnete Position bewegt werden kann, an welcher der Prozessor konfiguriert ist, um einen zweiten Mode, der eingeschränkten Zugang erlaubt, zur Verfügung zu stellen.

2. Endgerät gemäß Anspruch 1, wobei der erste Gehäuseteil und der zweite Gehäuseteil Gehäuseteile des Endgeräts sind, welche beweglich miteinander verbunden sind.

3. Endgerät gemäß Anspruch 1 oder 2, wobei der zweite Gehäuseteil ein Display umfasst.

4. Endgerät gemäß einem der Ansprüche 1 bis 3, wobei der erste Gehäuseteil eine Tastatur oder eine Tastatur-Abdeckung umfasst.

5. Endgerät gemäß einem der Ansprüche 1 bis 4, wobei der Prozessor konfiguriert ist, um vollen Zugang zu Daten und/oder Anwendungen und/oder Funktionalität in dem Endgerät zu geben, wenn sich der erste Gehäuseteil in der ersten Position relativ zu dem zweiten Gehäuseteil befindet.

6. Endgerät gemäß Anspruch 5, wobei der Prozessor konfiguriert ist, um den Zugang zu Daten und/oder Anwendungen und/oder Funktionalität in dem Endgerät einzuschränken, wenn der erste Gehäuseteil in der zweiten Position relativ zu dem zweiten Gehäuseteil ist.

7. Endgerät gemäß Anspruch 6, wobei der Prozessor konfiguriert ist, um eine Verifizierung anzufordern, bevor voller Zugang zu Daten und/oder Anwendungen und/oder Funktionalität in dem Endgerät gewährt wird, wenn der erste Gehäuseteil von der zweiten Position zu der ersten Position bewegt wird.

8. Endgerät gemäß einem der Ansprüche 1 bis 7, wobei der Prozessor konfiguriert ist, um in der zweiten Position den Zugang zu einer oder mehreren vorbestimmten Anwendungen zu beschränken.

9. Endgerät gemäß einem der Ansprüche 1 bis 8, wobei der Prozessor konfiguriert ist, um in der zweiten Position den Zugang zu Dateien in einer oder mehreren vorbestimmten Speichern oder Datei-Speichermedien, welche mit dem Endgerät verbunden sind, zu Dateien in einer oder mehreren vorbestimmten Ordnern in Speichern, welche mit dem Endgerät verbunden sind auf Speichermedien, welche mit dem Endgerät verbunden sind, oder zu einer oder mehreren vorbestimmten Dateien in Speichern, die mit dem Endgerät verbunden sind, zu beschränken.

10. Endgerät gemäß einem der Ansprüche 1 bis 9, wobei der Prozessor konfiguriert ist, um in der zweiten Position den Zugang zu einer oder mehreren vorbestimmten Funktionalitäten zu beschränken.

11. Endgerät gemäß einem der Ansprüche 1 bis 10, wobei das Endgerät mit einer Verbindung zu einem oder mehreren anderen Endgeräten oder zu einem Netzwerk versehen ist, und wobei der Prozessor konfiguriert ist, um die Verwendung der Verbindung in Abhängigkeit von der Position des ersten Gehäuseteils relativ zu dem zweiten Gehäuseteil zu beschränken.

12. Endgerät gemäß einem der Ansprüche 1 bis 11, wobei das Endgerät ein Notebook oder Tablet PC ist und der zweite Gehäuseteil das Display beinhaltet.

13. Endgerät gemäß einem der Ansprüche 1 bis 11, wobei das Endgerät ein Personal Digital Assistant ist.

14. Endgerät gemäß einem der Ansprüche 1 bis 11, wobei das Endgerät ein Mobiltelefon ist.

15. Verfahren zum Steuern des Zugangs zu einem Endgerät, versehen mit einem Prozessor, einer Benutzerschnittstelle, durch welche der Benutzer das Endgerät bedient, und ein Gehäuse, umfassend einen ersten Gehäuseteil, welcher relativ zu einem zweiten Gehäuseteil zwischen einer geschlossenen und weiterhin mindestens einer ersten und zweiten geöffneten Position bewegt werden kann,
wobei das Verfahren die Schritte umfasst:
Geben eines ersten, vollen Zugangslevels zu Daten und/oder Anwendungen in dem Endgerät in der ersten Position des ersten Gehäusteils,
**gekennzeichnet durch** ein zweites beschränktes Zugangslevel zu Daten und/oder Anwendungen in dem Endgerät in der zweiten Position des ersten Gehäuseteils.

16. Verfahren gemäß Anspruch 15, wobei die erste und zweite Position des ersten Gehäuseteils relativ zu dem zweiten Gehäuseteil durch Betrachter leicht erkennbar ist, auch durch andere Betrachter als die Person, die das Endgerät verwendet.

17. Verfahren gemäß Anspruch 15 oder 16, umfassend den Schritt des Gebens des vollen Zugangs zu Daten und/oder Anwendungen und/oder Funktionalität n dem Endgerät in dem ersten Zugangslevel.

18. Verfahren gemäß einem der Ansprüche 15 bis 17, umfassend den Schritt des Gebens von beschränktem Zugang zu Daten und/oder Anwendungen und/oder Funktionalität in dem Endgerät in dem zweiten Zugangslevel.

19. Verfahren gemäß einem der Ansprüche 15 bis 18, umfassend den Schritt des Anforderns der Verifizierung, bevor voller Zugang zu Daten und/oder Anwendungen und/oder Funktionalität in dem Endgerät gewährt wird, wenn das erste Gehäuseteil relativ zu dem zweiten Gehäuseteil von der zweiten Position zu der ersten Position bewegt wird.

20. Verfahren gemäß einem der Ansprüche 15 bis 19, wobei der Prozessor konfiguriert ist, um den Zugang in der zweiten Position zu einer oder mehreren vorbestimmten Anwendungen zu beschränken.

## Revendications

1. Terminal comportant :
un processeur,
une mémoire associée audit processeur,
une interface utilisateur par l'intermédiaire de laquelle l'utilisateur exploite le terminal,
un boîtier comportant une première partie de boîtier qui peut être déplacée relativement à une seconde partie de boîtier entre une position fermée et une première position ouverte,
et un moyen de capteur associé audit processeur pour détecter la position de ladite première partie de boîtier relativement à la seconde partie de boîtier,
ledit processeur étant configuré pour commander l'accès au terminal selon la position de ladite première partie de boîtier, en fournissant à la première position, un premier mode permettant un accès complet,
**caractérisé en ce que**
ladite première partie de boîtier peut être déplacée à au moins une seconde position ouverte à laquelle ledit processeur est configuré de manière à fournir un second mode permettant un accès limité.

2. Terminal selon la revendication 1, dans lequel la première partie de boîtier et la seconde partie de boîtier sont des parties de boîtier du terminal qui sont connectées de façon amovible l'une à l'autre.

3. Terminal selon la revendication 1 ou 2, dans lequel ladite seconde partie de boîtier comporte un affichage.

4. Terminal selon l'une quelconque des revendications 1 à 3, dans lequel ladite première partie de boîtier comporte un clavier ou une façade de clavier.

5. Terminal selon l'une quelconque des revendications 1 à 4, dans lequel le processeur est configuré de manière à proposer un accès total à des données et/ou à des applications et/ou à une fonctionnalité dans le terminal lorsque ladite première partie de boîtier est dans la première position relativement à la seconde partie de boîtier.

6. Terminal selon la revendication 5, dans lequel le processeur est configuré pour limiter l'accès à des données et/ou à des applications et/ou à une fonctionnalité dans le terminal lorsque ladite première partie de boîtier est dans ladite seconde position relativement à ladite seconde partie de boîtier.

7. Terminal selon la revendication 6, dans lequel ledit processeur est configuré pour demander une vérification avant d'octroyer un accès total à des données et/ou à des applications et/ou à une fonctionnalité dans le terminal lorsque ladite première partie de boîtier est déplacée de ladite seconde position à ladite première position.

8. Terminal selon l'une quelconque des revendications 1 à 7, dans lequel ledit processeur est configuré pour limiter l'accès dans ladite seconde position à une ou plusieurs applications prédéterminées.

9. Terminal selon l'une quelconque des revendications 1 à 8, dans lequel ledit processeur est configuré pour limiter l'accès, dans ladite seconde position, à des fichiers dans une ou plusieurs mémoires prédéterminées, ou supports de stockage de données associés au terminal, à des fichiers dans un ou plusieurs dossiers prédéterminés dans des mémoires associées au terminal sur un support de stockage associé audit terminal, ou à un ou plusieurs fichiers prédéterminés dans des mémoires associées au terminal.

10. Terminal selon l'une quelconque des revendications 1 à 9, dans lequel ledit processeur est configuré pour limiter l'accès, dans ladite seconde position, à une ou plusieurs fonctionnalités prédéterminées.

11. Terminal selon l'une quelconque des revendications 1 à 10, dans lequel le terminal est équipé d'une connexion à un ou plusieurs autres terminaux ou à un réseau, et dans lequel ledit processeur est configuré pour limiter l'utilisation de ladite connexion selon la position de ladite première partie de boîtier relativement à ladite seconde partie de boîtier.

12. Terminal selon l'une quelconque des revendications 1 à 11, dans lequel le terminal est un ordinateur portable ou une tablette PC, et dans lequel ladite seconde partie de boîtier inclut l'affichage.

13. Terminal selon l'une quelconque des revendications 1 à 11, dans lequel ledit terminal est un assistant numérique personnel.

14. Terminal selon l'une quelconque des revendications 1 à 11, dans lequel ledit terminal est un téléphone mobile.

15. Procédé pour commander l'accès à un terminal équipé d'un processeur, d'une interface utilisateur par l'intermédiaire de laquelle l'utilisateur exploite le terminal, et d'un boîtier comportant un première partie de boîtier qui peut être déplacée relativement à une seconde partie de boîtier, entre une position fermée et en outre au moins des première et seconde positions ouvertes, ledit procédé comportant les étapes consistant à :
proposer un premier niveau d'accès, complet, à des données et/ou à des applications dans le terminal dans la première position de ladite première partie de boîtier,
**caractérisé par** l'étape consistant à
proposer un second niveau d'accès, limité, à des données et/ou à des applications dans le terminal, dans la seconde position de la première partie de boîtier.

16. Procédé selon la revendication 15, dans lequel lesdites première et seconde positions de ladite première partie de boîtier relativement à ladite seconde partie de boîtier sont facilement reconnaissables par des observateurs, également par des observateurs distincts de la personne qui utilise le terminal.

17. Procédé selon la revendication 15 ou 16, comportant l'étape consistant à proposer un accès total à des données et/ou à des applications et/ou à une fonctionnalité dans le terminal dans le premier niveau d'accès.

18. Procédé selon l'une quelconque des revendications 15 à 17, comportant l'étape consistant à proposer un accès limité à des données et/ou à des applications et/ou à une fonctionnalité dans le terminal, dans le second niveau d'accès.

19. Procédé selon l'une quelconque des revendications 15 à 18, comportant l'étape consistant à demander une vérification avant d'octroyer un accès total à des données et/ou à des applications et/ou à une fonctionnalité dans le terminal lorsque la première partie de boîtier est déplacée relativement à la seconde partie de boîtier de ladite seconde position à ladite première position.

20. Procédé selon l'une quelconque des revendications 15 à 19, dans lequel ledit processeur est configuré pour limiter l'accès dans ladite seconde position à une ou plusieurs applications prédéterminées.
